# EUROPÄISCHE PATENTSCHRIFT

(11) **EP 3 052 834 B1**
(45) Veröffentlichungstag und Bekanntmachung des Hinweises auf die Patenterteilung: **10.11.2021**
(21) Anmeldenummer: 14787095.0
(22) Anmeldetag: 26.09.2014
(51) Int. Cl.: F16F 15/315

(54) **VERBINDUNGSEINRICHTUNG FÜR EINE REIBKUPPLUNG UND EINEN DREHSCHWINGUNGSDÄMPFER**
CONNECTING ARRANGEMENT FOR A FRICTION CLUTCH AND A TORSION DAMPER
DISPOSITIF D'ACCOUPLEMENT CONÇU POUR UN EMBRAYAGE À FRICTION ET UN AMORTISSEUR DE VIBRATIONS DE TORSION

(30) Priorität: 01.10.2013 DE 102013219925; 18.12.2013 DE 102013226355
(43) Veröffentlichungstag der Anmeldung: 10.08.2016
(73) Patentinhaber: Schaeffler Technologies AG & Co. KG, 91074 Herzogenaurach (DE)
(72) Erfinder: FINK, Jasper, 77880 Sasbach (DE); HOFSTETTER, Dirk, 76448 Durmersheim (DE); ALMERT, Andreas, 77767 Urloffen (DE); TEPPER, Philipp, 77815 Bühl (DE)
(86) Internationale Anmeldenummer: PCT/DE2014/200507
(87) Internationale Veröffentlichungsnummer: WO 2015/048966

(56) Entgegenhaltungen:
- FR-A1- 2 334 878
- FR-A1- 2 689 192
- US-A- 1 529 527
- US-A- 4 668 116
- US-A- 5 713 246
- None

## Beschreibung

Die Erfindung betrifft eine Reibkupplung und findet ihren Verwendungszweck in vielen Kraftfahrzeugen oder Nutzfahrzeugen mit Benzinmotor oder Dieselmotor, bei denen beim Einsatz eines Kupplungssystems sowohl viel Wert auf kompakte Bauweise als auch auf hohen Komfort im Betrieb gelegt wird.

Die meisten Kupplungssysteme passen zwar in den zur Verfügung stehenden Bauraum, jedoch liefert deren Aufbau keine Möglichkeit, weitere Maßnahmen zur Reduzierung der Drehungleichförmigkeiten der Verbrennungsmotoren zu integrieren. Darüber hinaus weist die Verbindungsstelle wegen der nötigen getrennten Montage von Kupplung und Zweimassenschwungrad Spiel auf, was im Betrieb zu Geräuschen führen kann.

Als weiterer Stand der Technik wird auf die FR 2 689 192 A1 verwiesen, die eine Vorrichtung zur Befestigung eines Schwungrads an der Kurbelwelle eines Verbrennungsmotors in Form von Drehverbindungsmitteln offenbart, wobei die Drehverbindungsmittel axial wenigstens einen kegelstumpfförmigen Stift zum Spielausgleich in der Verbindung von Kurbelwelle und Schwungrad aufweist.

Darüber hinaus ist aus der US 4 668 116 ebenfalls eine Verbindung von Schwungrad und Kurbelwelle beschrieben, wobei hier ein Verspannring zum spielfreien Verbinden einer Steckverbindung eingesetzt wird.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale des Patentanspruchs 1 gelöst. Vorteilhafte Weiterbildungen sind Gegenstand der abhängigen Patentansprüche.

Die Erfindung ist durch den Patentanspruchssatz definiert und betrifft eine Reibkupplung mit zumindest einer Verbindungseinrichtung, welcher zumindest die folgenden Komponenten aufweist:
- ein Ausgangselement eines Drehschwingungsdämpfers;
- ein Eingangselement einer Reibkupplung, wobei das Eingangselement mittels einer Steckverbindung drehmomentübertragend mit dem Ausgangselement verbindbar ist;
- ein Spannelement zum spielfreien Verspannen der Steckverbindung.

Die Verbindungseinrichtung ist dazu vorgesehen, ein spielfreies Verspannen zwischen der Reibkupplung und einem Drehschwingungsdämpfer, zum Beispiel einem Zweimassenschwungrad, herzustellen. Hierzu ist ein Ausgangselement eines Drehschwingungsdämpfers vorgesehen, welches einstückig mit dem Drehschwingungsdämpfer gebildet sein kann oder ein getrenntes Bauteil des Drehschwingungsdämpfers darstellen kann, welches als Verbindungselement zur Reibkupplung eingerichtet ist. Weiterhin ist ein Eingangselement einer Reibkupplung vorgesehen, welches ebenso ein einstückiges Element einer Komponente der Reibkupplung sein kann sowie ein separates Bauteil, welches zur Verbindung mit dem Drehschwingungsdämpfer eingerichtet ist. Das Eingangselement ist dabei drehmomentübertragend mit dem Ausgangselement verbindbar, wobei diese Verbindung mittels einer Steckverbindung vorgenommen werden kann. Eine solche Steckverbindung ist beispielsweise eine Verzahnung, bei der entweder das Eingangselement oder das Ausgangselement in das Ausgangselement beziehungsweise Eingangselement hineingesteckt wird. Somit hat das Eingangselement oder das Ausgangselement eine Außenverzahnung und das Ausgangselement beziehungsweise das Eingangselement eine Innenverzahnung. Charakteristisch für eine solche Steckverbindung ist, dass ein gewisses Spiel notwendig ist, um die Elemente gut miteinander fügen zu können. Insbesondere ist es notwendig, um eine Doppelpassung zu verhindern, dass (von einer Mehrzahl) von zwei gegenüberliegenden Flankenpaarungen der Steckverbindung (jeweils) nur eine der zwei Flankenpaarung der Steckverbindung miteinander zum Anliegen kommt und die jeweils der Drehrichtung gegenüberliegende Flankenpaarung beabstandet ist, also ein Spiel vorliegt. Somit kommt es zumindest bei einer Drehrichtungsumkehr beziehungsweise bei einer negativen Beschleunigung zum Tragen, dass hier dieses Spiel vorgesehen ist; denn dabei kann es zu einer Geräuschentwicklung kommen. Hierzu ist weiterhin ein Spannelement vorgesehen, welches auch verursacht, dass die Steckverbindung spielfrei verspannt wird. Dabei ist bevorzugt gemeint, dass bei einer Drehrichtungsumkehr oder einer negativen Beschleunigung die Steckverbindung mittels des Spannelements in seiner Position gehalten wird, oder zumindest nicht die bisher beabstandete(n) Flankenpaarung(en) (schlagartig) zum Anliegen kommen.

Gemäß einer weiteren vorteilhaften Ausführungsform der Verbindungseinrichtung erzeugt das Spannelement eine reibschlüssige Verbindung, und umfasst bevorzugt zumindest einen offenen Polygonring.

Mittels des hier vorgeschlagenen Spannelements wird eine reibschlüssige Verbindung erzeugt, die ein spielfreies Verspannen der Steckverbindung, zumindest in Rücklaufrichtung beziehungsweise in negativer Beschleunigungsrichtung, reibschlüssig unterbindet. Hierbei ist es ausreichend, wenn der Reibschluss ausreichend für die (maximal) anliegenden negativen Beschleunigungen ausgelegt wird. Für viele Anwendungen bei Kraftfahrzeugen ist eine Vorspannung um 5 bis 10 Nm (Newtonmeter) ausreichend. Besonders bevorzugt wird dieses Spannelement durch zumindest einen offenen Polygonring gebildet, welcher einfach zu montieren ist und einen effektiven Reibschluss bei Schlupf in Drehmomentrichtung erzeugen kann. Je nach anliegenden Kräften kann es dabei sinnvoll sein, eine Mehrzahl von offenen Polygonringen zu verwenden.

Gemäß einer weiteren vorteilhaften Ausführungsform der Verbindungseinrichtung bildet das Ausgangselement die Aufnahme für ein Steckelement an dem Eingangselement der Steckverbindung und das Eingangselement ein radial außerhalb der Aufnahme angeordnetes Widerlager für das Spannelement.

Bei dieser vorteilhaften Ausführungsform wird die Aufnahme für ein Steckelement, also bei einer Steckverzahnung die Innenverzahnung, beim Ausgangselement gebildet und das Steckelement, also die Außenverzahnung einer Steckverzahnung, am Eingangselement gebildet. Weiterhin umfasst das Eingangselement ein nach der Montage der Steckverbindung radial außerhalb der Aufnahme angeordnetes Widerlager, welches nach Art eines Vorsprungs die Aufnahme radial außerhalb zumindest teilweise umgibt und somit einen Spalt zwischen der Aufnahme und dem Widerlager bildet. In diesen Spalt ist das Spannelement, bevorzugt ein offener Polygonring, einführbar. Somit ist der Kraftkreis der Verspannung innerhalb des Eingangselements als ein integrales Bauteil gebildet und daher mit einfachen Mitteln sehr steif gestaltbar.

Gemäß einem erfindungsgemäßen Aspekt der Erfindung wird auch eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket, über das im angepressten Zustand ein Drehmoment übertragbar ist;
- zumindest einen Drehschwingungsdämpfer;
- zumindest eine Verbindungseinrichtung gemäß der obigen Beschreibung, wobei das Eingangselement zumindest mittelbar mit dem Reibpaket und das Ausgangselement zumindest mittelbar mit dem Drehschwingungsdämpfer verbunden ist.

Die Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket erreicht, welches eine axial verschiebliche, in der Regel mit der Abtriebswelle rotationsfest verbundene, Anpressplatte aufweist. Die Anpressplatte ist gegen zumindest eine korrespondierende Reibscheibe pressbar, infolge dessen eine Reibkraft entsteht, die multipliziert mit dem mittleren Radius der Reibfläche ein übertragbares Drehmoment ergibt. Beim Verpressen beziehungsweise Schalten und Lösen des Reibpakets entstehen Beschleunigungen und negative Beschleunigungen, sowie durch Veränderung der Drehzahl der angeschlossenen Antriebseinheit oder Drehungleichmäßigkeiten der Antriebseinheit können zu positiven und negativen Beschleunigungskomponenten an der Verbindungseinrichtung der Reibkupplung zwischen dem Drehschwingungsdämpfer und dem Reibpaket führen. Hierzu ist eine Verbindungseinrichtung gemäß der obigen Beschreibung vorgesehen, die durch ein Spannelement ein spielfreies Verspannen der Steckverbindung zwischen dem Reibpaket und dem Drehschwingungsdämpfer ermöglicht. Hierbei ist das Eingangselement zumindest mittelbar mit dem Reibpaket verbunden, das heißt, es ist einstückig mit einer Komponente des Reibpakets gebildet oder wird als separates Bauteil mit einer Komponente des Reibpakets gefügt, zum Beispiel durch Schweißen. Ebenso ist das Ausgangselement zumindest mittelbar mit dem Drehschwingungsdämpfer verbunden, das heißt, das Ausgangselement ist einstückig mit einer Komponente des Drehschwingungsdämpfers gebildet oder als separates Bauteil mit einer Komponente des Drehschwingungsdämpfers gefügt, zum Beispiel durch Schweißen. Die hier vorgeschlagene Verbindungseinrichtung ist zumindest nicht größer als bisherige Verbindungseinrichtungen und ist zudem in der Drehmomentübertragung spielfrei eingerichtet und unterbindet somit eine Geräuschentwicklung. Insbesondere bei der Ausführung des radial außerhalb der Aufnahme angeordneten Widerlagers am Eingangselement ist keine axiale Verlängerung durch die hier vorgeschlagene Verbindungseinrichtung der Reibkupplung notwendig.

Gemäß einer weiteren vorteilhaften Ausführungsform der Reibkupplung ist das zumindest eine Reibpaket in einem Nassraum angeordnet.

Gerade bei einer Reibkupplung mit Nassraum ist durch das Vorsehen eines abgeschlossenen Kupplungsraums eine Integration von weiteren Bauteilen, insbesondere eines Drehschwingungsdämpfers, in die Reibkupplung beschränkt. Zusätzliche Komponenten und Komponenten, die nicht in einem Nassraum angeordnet werden dürfen, müssen somit außerhalb des Reibkupplungsnassraums angeordnet werden. Mit der hier vorgeschlagenen Verbindungseinrichtung ist es möglich, auf kleinem Bauraum eine feste, insbesondere spielfreie, Verbindung zwischen einem Drehschwingungsdämpfer und zumindest einem Reibpaket der Reibkupplung zu erreichen, ohne dass aufgrund des Nassraums eine erhebliche Vergrößerung der Reibkupplung vorgenommen werden muss. Zugleich bleibt eine leichte Montierbarkeit, zum Beispiel mittels einer Steckverzahnung, erhalten.

Gemäß einer weiteren vorteilhaften Ausführungsform der Reibkupplung umfasst die Reibkupplung weiterhin zumindest ein Fliehkraftpendel, welches zumindest mittelbar mit dem Eingangselement verbunden ist.

Bei heutigen modernen Antriebseinheiten, insbesondere Verbrennungskraftmaschinen, werden sehr langsame Drehzahlen angesetzt, die zu Vibrationen im gesamten Antriebsstrang führen können, weil eine Resonanzfrequenz eines Bauteils getroffen wird. Insbesondere für solche Frequenzbereiche ist es notwendig, ein Fliehkraftpendel vorzusehen, welches zu einer weiteren Vergrößerung der Reibkupplung führen kann. Gerade bei einer solchen Reibkupplung ist es notwendig, eine effektive Verbindung zwischen der Reibkupplung und dem Drehschwingungsdämpfer zu erreichen. Weil sich ein Fliehkraftpendel gut in den Aufbau einer Reibkupplung integrieren lässt und auch auf die Frequenzen der Reibkupplung ausgelegt ist, aber eng mit einem Drehschwingungsdämpfer zusammenarbeiten soll, ist es vorteilhaft, eine spielfreie Verbindung zwischen dem Drehschwingungsdämpfer und dem Fliehkraftpendel zu erreichen. Mit der hier vorgeschlagenen Steckverbindung mit Spannelement ist dies besonders einfach umsetzbar, ohne zusätzlichen axialen Bauraum zu benötigen.

Gemäß einer weiteren vorteilhaften Ausführungsform der Reibkupplung ist das Fliehkraftpendel im Nassraum angeordnet.

Das Fliehkraftpendel in einem Nassraum der Reibkupplung anzuordnen, hat den Vorteil, dass das Fliehkraftpendel zum einen eine verbesserte Tilgung bei geringerer Masse aufweist und zum anderen axial geringeren Bauraum erfordert. Durch die Anordnung der Pendelmassen in einem Nassraum wird die Schwingungsträgheit entgegen der Drehrichtung des Kühlmittels erhöht, wobei die Rotationsmasse gegenüber einem trocken laufenden Fliehkraftpendel verringerbar ist und somit die Trägheit des Fliehkraftpendels reduzierbar ist.

Gemäß einer weiteren vorteilhaften Ausführungsform der Reibkupplung ist zwischen dem zumindest einen Reibpaket und zumindest einem der Fliehkraftpendel ein Zwischenelement vorgesehen, welches als separates Bauteil das zumindest eine Fliehkraftpendel mit dem zumindest einen Reibpaket drehmomentübertragend verbindet.

Durch das Vorsehen eines Zwischenelements zwischen dem zumindest einen Reibpaket und dem Fliehkraftpendel ist es möglich, axialen Bauraum zu gewinnen. Im Stand der Technik wird das Fliehkraftpendel häufig in einen den Lammellenkorb bildenden Topf axial seitlich zu den Lamellen zusätzlich eingehängt. Hierbei ist es aufgrund des meist erforderlichen im Vergleich zu den Lamellen größeren Außendurchmessers des Fliehkraftpendels notwendig, zur Aufnahme des Fliehkraftpendels eine Durchmessererweiterung des Topfs vorzusehen. Dadurch ist ein Bereich mit einem Knick nach radial außen und einem weiteren Knick in axialer Richtung vorgesehen, welche für sich genommen bereits aufgrund der notwendigen Mindestradien der Knicke zur Herstellung eines solchen Topfs zu einem erheblichen zusätzlichen und meist ungenutzten axialen Bauraum führt. Das Zwischenelement ist nun ein separates Bauteil, welches mit einem den Lamellenkorb bildenden Topf zum Beispiel durch eine Steckverbindung verbindbar ist. Damit muss bei einem radial größeren Außendurchmesser des Fliehkraftpendels das Zwischenelement nur einen Knick nach radial innen aufweisen. Damit fällt gegenüber der oben beschriebenen Anordnung bereits ein Knick weg. Weiterhin ist es aber auch noch möglich, den verbleibenden Knick mit dem Topf für die Lamellen des Reibpakets in axiale Überdeckung zu bringen. Somit wird Bauraum eingespart.

Gemäß einer weiteren vorteilhaften Ausführungsform der Reibkupplung ist beim Reibpaket ein Eingangslamellenträger vorgesehen, welcher einen ersten Bereich zur Aufnahme der Eingangslamellen und einen zweiten Bereich zur Aufnahme der Eingangslamellen einer zweiten Teilkupplung auweist.

Durch die einteilige Ausbildung des Eingangslamellenträgers wird eine gute Drehmomentübertragung erreicht und ein einziges Bauteil verwendet, welches aufgrund der beim Schalten in einen anderen Gang üblichen Wechselbeschaltung der Teilkupplungen stets mit einem nahezu konstanten Drehmoment beaufschlagt ist.

Gemäß einer erfindungsgemäßen Ausführungsform der Reibkupplung ist die Reibkupplung eine Doppelkupplung mit zwei unabhängig voneinander verpressbaren Reibpaketen.

Gerade bei Doppelkupplungen ist der Bauraumbedarf besonders groß, so dass ein Verbindungselement von geringer axialer Baugröße erforderlich ist. Insbesondere eine Doppelkupplung, die alle oben beschriebenen Ausführungsformen umfasst, kann besonders klein ausgeführt werden und erfüllt dennoch die Anforderungen an moderne Antriebseinheiten, das heißt sie kann geringe Drehzahlen ausgleichen und Drehungleichförmigkeiten dämpfen, wobei gleichzeitig eine hohe Übertragungseffizienz und geringe Geräuschentwicklung erreicht werden. Gerade bei dem aktuellen Trend, kleine Motoren mit niedriger Zylinderzahl, zum Beispiel drei Zylindern, mit einer Doppelkupplung mit Zweimassenschwungrad zu verbinden ist es notwendig die gerade dort auftretenden Drehungleichförmigkeiten zu reduzieren, um den Komfortansprüchen gerecht zu werden. Zugleich muss eine einfache Montage der Komponenten sichergestellt sein und die Geräuschbildung unterbunden werden. Dies ist durch die oben beschriebene spielfreie Steckverbindung erreichbar.

Gemäß einem weiteren Aspekt der Erfindung wird ein Kraftfahrzeug vorgeschlagen, welches eine Antriebseinheit mit einer Abtriebswelle, einen Antriebsstrang und eine Reibkupplung gemäß der obigen Beschreibung umfasst.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Verbindungseinrichtung ermöglicht den Einsatz einer im Vergleich zu einer Einfachkupplung relativ großen Doppelkupplung, die zugleich mit den einem Fliehkraftpendel ausgestattet ist und mit einem separaten Drehschwingungsdämpfer einfach und spielfrei verbindbar ist.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:

- Fig. 1:: eine Doppelkupplung mit Spannelement und Fliehkraftpendel,
- Fig. 2:: ein Fliehkraftpendel mit Zwischenelement,
- Fig. 3:: eine Reibkupplung mit Spannelement und Fliehkraftpendel,
- Fig. 4:: eine Verbindungseinrichtung mit Spannelement,
- Fig. 5:: ein Spannelement,
- Fig. 6:: ein Kraftfahrzeug mit Reibkupplung.

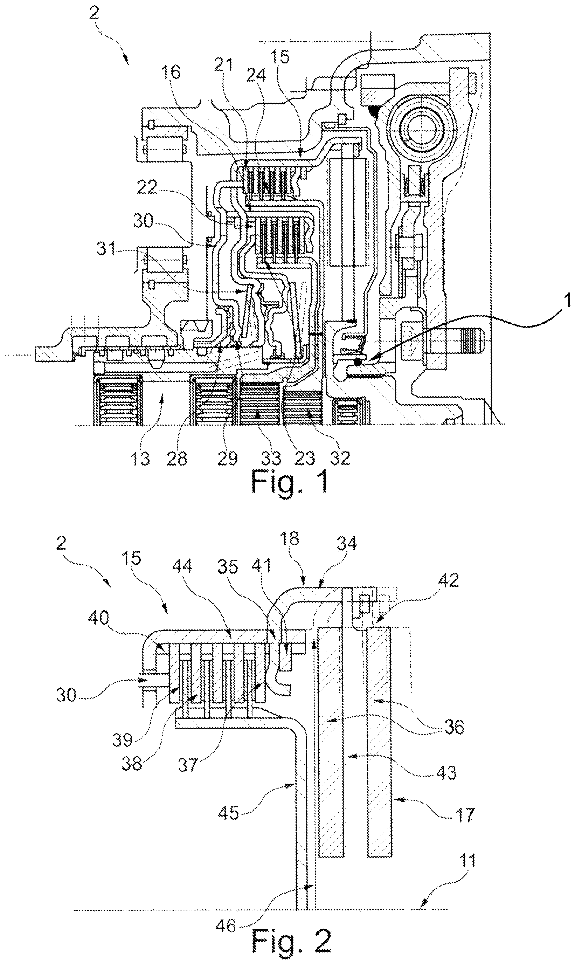

Fig. 1 zeigt eine Reibkupplung 2, bei der ein erstes Reibpaket 15 und ein zweites Reibpaket 16 vorgesehen sind. Das erste Reibpaket 15 umfasst dabei eine erste Anpressplatte 21 und eine erste Reibscheibe 23 und das zweite Reibpaket 16 umfasst eine zweite Anpressplatte 22 und eine zweite Reibscheibe 24, welche jeweils miteinander in reibschlüssigen Kontakt gebracht werden können, um somit schaltbar ein Drehmoment in den Reibpaketen 15 und 16 zu übertragen. Bei dieser Ausführungsform werden die Reibpakete 15 und 16 über zum Beispiel eine Druckkammer 28 betätigt, welche auf eine Betätigungseinrichtung 30 derart einwirkt, dass ein jeweiliges Reibpaket 15 oder 16 verpresst wird. Eine Rückstellfeder 31 erzeugt dabei die notwendige Gegenkraft, um ein Reibpaket 15 oder 16 zu lösen. Das von der Abtriebswelle 13 abgegebene Drehmoment ist über die Reibpakete 15 und 16 auf eine erste Ausgangswelle 32 beziehungsweise eine zweite Ausgangswelle 33 übertragbar. Weiterhin ist ein Fliehkraftpendel 17 vorgesehen, welches über eine Lasche eines Außenlamellenträgers 44 drehmomentübertragend verbunden ist. Hierbei ist das Eingangselement 5 mit dem Fliehkraftpendel 17 verbunden, so dass das Drehmoment durch das Fliehkraftpendel 17 für vorbestimmte Tilgungsfrequenzen schwingungsentkoppelt auf die Reibpakete 15 und 16 übertragen wird. Das Eingangselement 5 ist über eine Steckverbindung 6 mit einem Ausgangselement 4 verbunden, welches mit einem Drehschwingungsdämpfer 3 verbunden ist. Der Drehschwingungsdämpfer 3 wiederum ist mit einer Abtriebswelle 13 verbunden, so dass ein Drehmoment von der Abtriebswelle 13 durch den Drehschwingungsdämpfer 3 gedämpft auf die Reibkupplung 2 übertragen wird.

In Fig. 2 ist ein Ausschnitt eines ersten Reibpakets 15 gezeigt, bei dem ein Außenlamellenträger 44 mit einer Lamellenverzahnung 40 versehen ist, in welchem die äußeren Lamellen 38 eingehängt sind, so dass ein Drehmoment von dem Außenlamellenträger 44 auf die äußeren Lamellen 38 übertragbar ist. Der Außenlamellenträger 44 ist in einem Befestigungsabschnitt 35 mit einem Zwischenelement 18 verbindbar, wobei das Zwischenelement 18 zum einen Endanschlag 37 für die Lamellen des Reibpakets 15 bilden. Weiterhin bildet das Zwischenelement 18 eine Drehmoment übertragende Verbindung für das Fliehkraftpendel 17 beziehungsweise über dessen Drehmomentübertragungselement 43, welches auch als Schwungscheibe dienen kann (abhängig von der jeweiligen Eigenmasse des Drehmomentübertragungselements). An dem Drehmomentübertragungselement 43 sind weiterhin Pendelmassen 36 vorgesehen, welche beweglich an dem Drehmomentübertragungselement 43 aufgehängt sind und somit im Schadensfall ausreißen könnten. Hierfür bildet das Zwischenelement 18 zudem einen Berstschutz, welcher übrige Bauteile der Reibkupplung 2 vor Beschädigung durch die Pendelmassen 36 schützt. Der Radius 46 des Außenlamellenträgers 40 ist dabei kleiner als die äußerste Kante der Pendelmassen 36. Zwischen den Außenlamellen 38 befinden sich innere Lamellen 39, welche mit einem Innenlamellenträger 45 verbunden sind, welche schaltbar über die Betätigungseinrichtung ein Drehmoment vom Außenlamellenträger 44 übernimmt. Die hier dargestellten Komponenten sind allesamt um die Rotationsachse 11 der Reibkupplung 2 rotierbar.

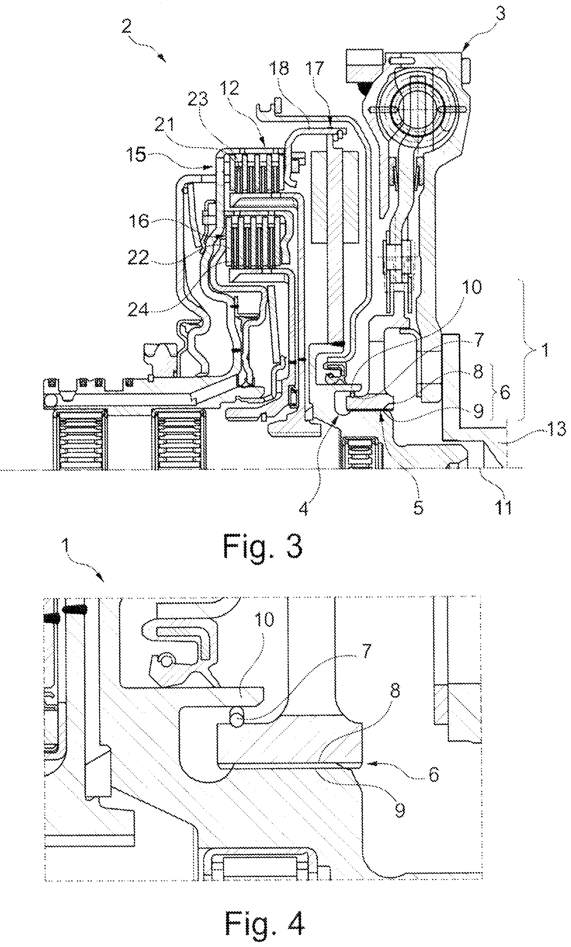

In Fig. 3 ist eine Reibkupplung 2 dargestellt, welche ein erstes Reibpaket 15 und ein zweites Reibpaket 16 umfasst, welche sich in einem Nassraum 12 befinden. Im Wesentlichen ist der Aufbau ähnlich wie in der Fig. 1, wobei hier zwischen dem Fliehkraftpendel 17 einem einteiligen Außenlamellenträger 44 ein separates Zwischenelement 18 vorgesehen ist, welches mit dem Außenlamellenträger 44 über eine Steckverbindung und einen Sicherungsring verbunden ist. Damit wird erheblicher axialer Bauraum eingespart.

In Fig. 4 ist eine Detaildarstellung der Anordnung wie in Fig. 3 dargestellt, wobei hier das Spannelement 7 zwischen dem Ausgangselement 4 und dem Widerlager 10 gut zu erkennen ist. Die Aufnahme 8 des Ausgangselements 4 ist hier als Innenverzahnung ausgebildet und das Steckelement 9 des Eingangselements 5 ist als korrespondierende Außenverzahnung ausgebildet, so dass eine Drehmomentübertragung durch die Mehrzahl der Flankenpaarungen in Drehrichtung ermöglicht ist. Bei einer zur Normaldrehrichtung negativen Beschleunigung verhindert das Spannelement 7, das hier als Reibschluss erzeugender Polygonring ausgebildet ist, ein (schlagartiges) Verdrehen der Aufnahme 8 zum Steckelement 9 und unterdrückt somit eine Geräuschentwicklung. Das Fliehkraftpendel 17 ist dabei in der Kupplungsglocke 48 angeordnet, die den Nassraum 12 der Reibkupplung 2 umschließt, also im Nassraum 12 angeordnet.

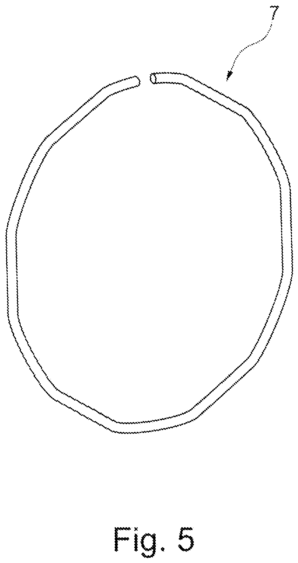

Fig. 5 zeigt einen Polygonring, der ein Spannelement 7 bilden kann. Aufgrund seiner Mehrzahl von Knicken kann der Polygonring einen guten Reibschluss bei Schlupf in Umfangsrichtung erzeugen, wobei nur geringer Bauraum benötigt wird. Der Polygonring bildet im Einbau mit dem Widerlager 10 und der Aufnahme 8 Reibstellen, so dass eine Radialkraft durch elastische Verformung erreicht wird. Der Polygonring ist bevorzugt aus Federstahl gebildet und/oder ermöglicht ein Reibmoment von 5 Nm bis 10 Nm.

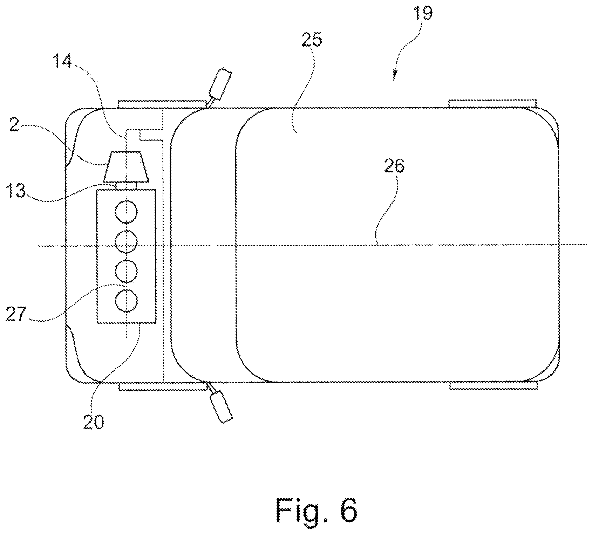

In Fig. 6 ist ein Kraftfahrzeug 19 mit einer Antriebseinheit 20 gezeigt, welche mit ihrer Motorachse 27 quer zur Längsachse 26 vor der Fahrerkabine 25 angeordnet ist. Die Antriebseinheit 20 ist hier als Verbrennungskraftmaschine dargestellt, welche über eine Abtriebswelle 13 mittels einer Reibkupplung 2 mit einem hier rein schematisch dargestellten Antriebsstrang 14 verbunden ist.

Mit der hier vorgeschlagenen Verbindungseinrichtung ist es möglich bei gleichzeitig einfacher Montage auf geringem Bauraum eine geräuschlose Verbindung zwischen einer Reibkupplung und einem Drehschwingungsdämpfer zu erreichen.

## Patentansprüche

1. Reibkupplung (2) mit einer Rotationsachse (11) zum lösbaren Verbinden einer Abtriebswelle (13) mit einem Antriebsstrang (14), aufweisend zumindest die folgenden Komponenten:
- zumindest ein Reibpaket (15,16), über das im angepressten Zustand ein Drehmoment übertragbar ist;
- zumindest einen Drehschwingungsdämpfer (3);
- zumindest eine Verbindungseinrichtung (1) aufweisend zumindest die folgenden Komponenten:
- ein Ausgangselement (4) des Drehschwingungsdämpfers (3);
- ein Eingangselement (5) der Reibkupplung (2), wobei das Eingangselement (5) mittels einer Steckverbindung (6) drehmomentübertragend mit dem Ausgangselement (4) verbindbar ist;
- ein Spannelement (7) zum spielfreien Verspannen der Steckverbindung (6), wobei das Eingangselement (5) zumindest mittelbar mit dem zumindest einen Reibpaket (15,16) und das Ausgangselement (4) zumindest mittelbar mit dem Drehschwingungsdämpfer (3) verbunden ist, **dadurch gekennzeichnet, dass** die Reibkupplung (2) eine Doppelkupplung mit zwei unabhängig voneinander verpressbaren Reibpaketen (15,16) ist.

2. Reibkupplung (2) nach Anspruch 1, wobei das Spannelement (7) der Verbindungseinrichtung (1) eine reibschlüssige Verbindung erzeugt, und bevorzugt zumindest einen offenen Polygonring umfasst.

3. Reibkupplung nach Anspruch 1 oder 2, wobei das Ausgangselement (4) die Aufnahme (8) für ein Steckelement (9) an dem Eingangselement (5) der Steckverbindung (6) bildet und das Eingangselement (5) ein radial außerhalb der Aufnahme (8) angeordnetes Widerlager (10) für das Spannelement (7) bildet.

4. Reibkupplung (2) nach einem der vorherigen Ansprüche, wobei das zumindest eine Reibpaket (15,16) in einem Nassraum (12) angeordnet ist.

5. Reibkupplung (2) nach einem der vorherigen Ansprüche, wobei die Reibkupplung (2) weiterhin zumindest ein Fliehkraftpendel (17) umfasst, welches zumindest mittelbar mit dem Eingangselement (5) verbunden ist.

6. Reibkupplung (2) nach Anspruch 5, wobei das Fliehkraftpendel (17) im Nassraum (12) angeordnet ist.

7. Reibkupplung (2) nach Anspruch 5 oder 6, wobei zwischen dem zumindest einen Reibpaket (15,16) und zumindest einem der Fliehkraftpendel (17) ein Zwischenelement (18) vorgesehen ist, welches als separates Bauteil das zumindest eine Fliehkraftpendel (17) mit dem zumindest einen Reibpaket (15,16) drehmomentübertragend verbindet.

8. Kraftfahrzeug (19) aufweisend eine Antriebseinheit (20) mit einer Abtriebswelle (13), einen Antriebsstrang (14) und eine Reibkupplung (2) nach einem der Ansprüche 1 bis 7.

## Claims

1. A friction clutch (2) with an axis of rotation (11) for releasably connecting a drive shaft (13) to a drive train (14), having at least the following components:
- at least one friction set (15, 16), via which a torque can be transmitted in the pressed state;
- at least one torsion damper (3);
- at least one connecting arrangement (1), having at least the following components:
- an output element (4) of the torsion damper (3);
- an input element (5) of the friction clutch (2), wherein the input element (5) can be connected to the output element (4) in a torque-transmitting manner by means of a plug connection (6);
- a clamping element (7) for play-free clamping of the plug connection (6), wherein the input element (5) is connected at least indirectly to the at least one friction set (15, 16) and the output element (4) is connected at least indirectly to the torsion damper (3), **characterised in that** the friction clutch (2) is a double clutch with two friction sets (15, 16) that can be pressed independently of one another.

2. The friction clutch (2) according to claim 1, wherein the clamping element (7) of the connecting arrangement (1) creates a frictional connection, and preferably comprises at least one open polygon ring.

3. The friction clutch according to claim 1 or 2, wherein the output element (4) forms the receptacle (8) for a plug element (9) on the input element (5) of the plug connection (6) and the input element (5) forms an abutment (10) for the clamping element (7) arranged radially outside the receptacle (8).

4. The friction clutch (2) according to any one of the preceding claims, wherein the at least one friction set (15, 16) is arranged in a wet space (12).

5. The friction clutch (2) according to any one of the preceding claims, wherein the friction clutch (2) further comprises at least one centrifugal pendulum (17) that is at least indirectly connected to the input element (5).

6. The friction clutch (2) according to claim 5, wherein the centrifugal pendulum (17) is arranged in the wet space (12).

7. The friction clutch (2) according to claim 5 or 6, wherein, between the at least one friction set (15, 16) and at least one of the centrifugal pendulums (17), an intermediate element (18) is provided that, as a separate component, connects the at least one centrifugal pendulum (17) to the at least one friction set (15, 16) in a torque-transmitting manner.

8. A motor vehicle (19) having a drive unit (20) with an output shaft (13), a drive train (14), and a friction clutch (2) according to one of claims 1 to 7.

## Revendications

1. Embrayage à friction (2) comprenant un axe de rotation (11) permettant de relier de manière amovible un arbre de sortie (13) à une chaîne cinématique (14), comprenant au moins les composants suivants :
- au moins un groupe de friction (15, 16) au moyen duquel un couple peut être transmis à l'état pressé ;
- au moins un amortisseur de vibrations de torsion (3) ;
- au moins un dispositif de liaison (1) comprenant au moins les composants suivants :
- un élément de sortie (4) de l'amortisseur de vibrations de torsion (3) ;
- un élément d'entrée (5) de l'embrayage à friction (2), dans lequel l'élément d'entrée (5) peut être relié à l'élément de sortie (4) de manière à transmettre le couple au moyen d'un élément de liaison enfichable (6) ;
- un élément de serrage (7) permettant de serrer sans jeu l'élément de liaison enfichable (6), dans lequel l'élément d'entrée (5) est relié au moins indirectement à au moins ledit paquet de friction (15, 16) et l'élément de sortie (4) est relié au moins indirectement à l'amortisseur de vibrations de torsion (3), **caractérisé en ce que** l'embrayage à friction (2) est un embrayage double comportant deux groupes de friction (15, 16) pouvant être pressés indépendamment l'un de l'autre.

2. Embrayage à friction (2) selon la revendication 1, dans lequel l'élément de serrage (7) du dispositif de liaison (1) crée une liaison par friction et comprend, de préférence au moins un anneau polygonal ouvert.

3. Embrayage à friction selon la revendication 1 ou 2, dans lequel l'élément de sortie (4) forme le logement (8) pour un élément enfichable (9) sur l'élément d'entrée (5) de la liaison enfichable (6) et l'élément d'entrée (5) forme radialement à l'extérieur du logement (8) une butée (10) agencée pour l'élément de serrage (7).

4. Embrayage à friction (2) selon l'une quelconque des revendications précédentes, dans lequel au moins ledit groupe de friction (15, 16) est disposé dans une chambre humide (12).

5. Embrayage à friction (2) selon l'une quelconque des revendications précédentes, dans lequel l'embrayage à friction (2) comprend en outre au moins un pendule centrifuge (17), lequel est au moins indirectement relié à l'élément d'entrée (5).

6. Embrayage à friction (2) selon la revendication 5, dans lequel le pendule centrifuge (17) est disposé dans la chambre humide (12).

7. Embrayage à friction (2) selon la revendication 5 ou 6, dans lequel entre au moins ledit groupe de friction (15, 16) et au moins un des pendules centrifuges (17), un élément intermédiaire (18) est situé, lequel, en tant que composant séparé, relie au moins ledit pendule centrifuge (17) à au moins ledit groupe de friction (15, 16) pour transmettre un couple.

8. Véhicule automobile (19) comprenant une unité d'entraînement (20) comportant un arbre de sortie (13), une chaîne cinématique (14) et un embrayage à friction (2) selon l"une quelconque des revendications 1 à 7.
